# EUROPÄISCHE PATENTSCHRIFT

(11) **EP 3 014 592 B1**
(45) Veröffentlichungstag und Bekanntmachung des Hinweises auf die Patenterteilung: **22.01.2020**
(21) Anmeldenummer: 14734740.5
(22) Anmeldetag: 20.06.2014
(51) Int. Cl.: G08C 17/02

(54) **VERFAHREN UND VORRICHTUNG ZUR FERNSTEUERUNG EINER FUNKTION EINES FAHRZEUGS**
METHOD AND DEVICE FOR PERFORMING REMOTE CONTROL OF A FUNCTION OF A VEHICLE
PROCÉDÉ ET DISPOSITIF DE COMMANDE À DISTANCE D'UNE FONCTION D'UN VÉHICULE

(30) Priorität: 28.06.2013 DE 102013010819
(43) Veröffentlichungstag der Anmeldung: 04.05.2016
(73) Patentinhaber: Daimler AG, 70372 Stuttgart (DE)
(72) Erfinder: SCHEERLE, Marc, 72127 Kusterdingen (DE); SCHOEPGES, Holger, 73110 Hattenhofen (DE)
(74) Vertreter: JENSEN & SON
(86) Internationale Anmeldenummer: PCT/EP2014/001679
(87) Internationale Veröffentlichungsnummer: WO 2014/206543

(56) Entgegenhaltungen:
- DE-A1-102009 051 463
- DE-A1-102011 056 497
- DE-A1-102012 001 583
- JP-A- 2002 315 078

## Beschreibung

Die Erfindung betrifft ein Verfahren zur Fernsteuerung einer Funktion eines Fahrzeugs, gemäß dem Oberbegriff des Patentanspruchs 1.

Die Erfindung betrifft weiterhin eine Vorrichtung zur Fernsteuerung einer Funktion eines Fahrzeugs gemäß dem Oberbegriff des Patentanspruchs 8.

Aus der DE 10 2012 001 583 A1 sind ein Verfahren und ein System zur Steuerung, Überwachung und Konfiguration einer als Kraftfahrzeug ausgebildeten netzwerkfähigen Anordnung mit wenigstens einem Funktionselement bekannt, welches wenigstens zwei Funktionszustände aufweist. Das Verfahren wird mittels eines mobilen, netzwerkfähigen und als Mobiltelefon ausgebildeten Steuergeräts durchgeführt, wobei das Steuergerät eine Anzeige und eine Kamera aufweist. Dabei bauen die Anordnung und das Steuergerät eine Netzwerkverbindung auf und das Steuergerät nimmt mittels der Kamera ein Kamerabild des wenigstens einen Funktionselements auf. Weiterhin wird das Funktionselement erkannt und es wird wenigstens eine Auswahl aus den wenigstens zwei Funktionszuständen des Funktionselements ermittelt, wobei die Anzeige des Steuergeräts das aufgenommene Kamerabild anzeigt und zusätzlich wenigstens die Auswahl aus den wenigstens zwei Funktionszuständen des Funktionselements ermittelt wird, so dass ein Bediener des Steuergeräts wenigstens einen Funktionszustand des Funktionselements auswählen kann. Der vom Bediener ausgewählte Funktionszustand wird vom Steuergerät über das Netzwerk an die Anordnung übermittelt und das Funktionselement wird in den vom Bediener ausgewählten Funktionszustand gebracht. Weiterhin beschreibt die DE 10 2012 001 583 A1 ein Computerprogrammprodukt zur Durchführung des Verfahrens.

Aus der JP 2002315078 A ist ein Kommunikationssystem bekannt, bei dem mit einem Terminal, das ein "directional signal detecting device" aufweist, eine Netzwerkadresse eines Geräts detektiert wird, auf das das Terminal ausgerichtet ist. Nachdem die Netzwerkadresse identifiziert worden ist, wird eine Kommunikationsverbindung zwischen dem Terminal und dem Gerät aufgebaut. Diese Kommunikationsverbindung bleibt bestehen, wenn das Terminal nicht mehr auf das Gerät ausgerichtet ist. Die gerichtete Signaldetektion dient ausschließlich der Ermittlung der für die Kommunikationsverbindung benötigten Netzwerkadresse.

Aus der DE 102009051463 A1 ist ein Verfahren und eine Vorrichtung bekannt, bei dem bzw. bei der eine Ausparkfunktion eines Fahrzeugs mittels einer mobilen Steuereinheit ferngesteuert wird. Dabei wird die Position eines sich außerhalb des Fahrzeugs befindenden Fahrers relativ zum Fahrzeug als Zielposition ermittelt und das Fahrzeug wird geregelt in die Zielposition gebracht. Die Ermittlung der Zielposition erfolgt in der mobilen Steuereinheit. Dazu sind am Fahrzeug Infrarotmarker vorgesehen, die von einem bildgebenden Sensor der mobilen Steuereinheit erfassbar sind und anhand derer die mobile Steuereinheit die Position des Fahrzeugs relativ zur mobilen Steuereinheit ermittelt.

Aus der DE 10 2011 056 497 sind ein Verfahren und System bekannt, die eine Kommunikation zwischen einem Smartphone eines autorisierten Benutzers und einem Fahrzeug ermöglichen.

Der Erfindung liegt die Aufgabe zu Grunde, ein gegenüber dem Stand der Technik verbessertes Verfahren und eine verbesserte Vorrichtung zur Fernsteuerung einer Funktion eines Fahrzeugs anzugeben.

Hinsichtlich des Verfahrens wird die Aufgabe erfindungsgemäß durch die im Anspruch 1 angegebenen Merkmale und hinsichtlich der Vorrichtung durch die im Anspruch 8 angegebenen Merkmale gelöst.

Vorteilhafte Ausgestaltungen der Erfindung sind Gegenstand der Unteransprüche.

In einem Verfahren zur Fernsteuerung einer Funktion eines Fahrzeugs werden mittels einer in der mobilen Steuereinheit integrierten Signalempfangseinheit ein Signal des Fahrzeugs erfasst, welches erfindungsgemäß an zumindest einer vorgegebenen Position am Fahrzeug als ein optisches oder ein akustisches Signal erzeugt wird. Die Fernsteuerung wird ausschließlich dann freigegeben und bleibt nur solange freigegeben, wenn und solange ein Nutzer die mobile Steuereinheit so hält, dass das optische oder akustische Signal von der Signalemfangseinheit erfasst wird, und die Durchführung der Fernsteuerung wird unterbrochen, wenn das Signal von der Signalemfangseinheit nicht erfasst wird Die Signalemfangseinheit kann eine in der mobilen Steuereinheit integrierte Kamera oder ein Mikrofon sein. Das erfindungsgemäße Verfahren ermöglicht in besonders vorteilhafter Weise, dass die Fernsteuerung nur dann erfolgt, wenn die mobile Steuereinheit, d. h. insbesondere deren Kamera, auf das Fahrzeug gerichtet ist. Somit ist die mobile Steuereinheit in besonders vorteilhafter Weise als so genannter Totmannschalter verwendbar, wobei der Blick eines Nutzers bedingt durch die Ausrichtung der Kamera auf das Fahrzeug auf dieses gerichtet ist. Somit ermöglicht das erfindungsgemäße Verfahren in besonders vorteilhafter Weise auch die Durchführung von autonomen Fahrvorgängen, beispielsweise autonome Einparkvorgänge, des Fahrzeugs realisierbar, welche bei einer Abwendung des Blickes des Nutzers vom Fahrzeug und daraus folgender Änderung der Ausrichtung der Kamera auf vom Fahrzeug abweichende Positionen automatisch unterbrochen werden.

In einer möglichen Weiterbildung des Verfahrens werden mittels des optischen oder akustischen Signals kodierte Informationen ausgegeben. Diese Ausgabe ermöglicht es, dass die optischen oder akustischen Signale nur von einer autorisierten mobilen Steuereinheit erkannt werden können.

Gemäß einer Ausgestaltung werden die kodierten Informationen mittels der Signalemfangseinheit erfasst und mittels der mobilen Steuereinheit verarbeitet und um einen Schlüsselcode zu einem Berechtigungssignal erweitert, wobei das Berechtigungssignal über eine zwischen der mobilen Steuereinheit und dem Fahrzeug aufgebaute Datenverbindung an das Fahrzeug übertragen wird. Somit kann vom Fahrzeug erkannt werden, dass die betreffende mobile Steuereinheit eine Autorisierung zur Fernsteuerung der Funktion aufweist.

Gemäß einer weiteren Ausgestaltung wird die Fernsteuerung ausschließlich dann freigegeben, wenn das Berechtigungssignal vom Fahrzeug erfasst und als gültig erkannt wird. Somit wird ausgeschlossen, dass die Fernsteuerung mittels einer mobilen Steuereinheit, welche nicht über eine gültige Autorisierung verfügt, durchgeführt wird.

Alternativ wird die Fernsteuerung für einen vorgegebenen Zeitraum nach Erfassung eines als gültig vom Fahrzeug erkannten und erfassten Berechtigungssignals freigegeben. Dadurch, dass die Freigabe zeitlich begrenzt ist und die Berechtigung in zeitlichen Abständen von der betreffenden mobilen Steuereinheit erneuert werden muss, ist die Gefahr einer unberechtigten Fernsteuerung, beispielsweise durch so genannte Hacker, verringert.

In einer möglichen Weiterbildung werden die mittels der Kamera erfassten Bilder des Fahrzeugs mittels einer in der mobilen Steuereinheit integrierten optischen Anzeigeeinheit ausgegeben. Somit hat der Nutzer in einfacher Weise die Möglichkeit, gleichzeitig das Fahrzeug im Blick zu haben und die Kamera in der erforderlichen Weise auf das Fahrzeug zu richten.

Gemäß einer Ausgestaltung wird das optische Signal als Lichtsignal mittels zumindest einer Lichteinheit des Fahrzeugs ausgegeben. Bei dem Lichtsignal handelt es sich beispielsweise um ein Lichtsignal im für menschliche Augen sichtbaren Bereich. Somit sind in vorteilhafter Weise bereits am Fahrzeug befindliche Lichteinheiten, beispielsweise Scheinwerfer, Rückleuchten, Fahrtrichtungsanzeiger und/oder Markierungsleuchten, zur Erzeugung des Lichtsignals verwendbar, so dass ein Materialaufwand zur Realisierung des Verfahrens minimiert ist. Alternativ kann es sich bei dem Lichtsignal auch um ein für menschliche Augen im nicht-sichtbaren Bereich befindliches Signal handeln.

Die Vorrichtung zur Fernsteuerung einer Funktion eines Fahrzeugs umfasst eine mobile Steuereinheit, welche eine integrierte Signalempfangseinheit zur Erfassung von Signalen des Fahrzeugs umfasst. Erfindungsgemäß ist an zumindest einer vorgegebenen Position am Fahrzeug eine Signalerzeugungseinheit zur Erzeugung eines Signals angeordnet und das Fahrzeug umfasst eine Funktionseinheit zur Steuerung der einen Funktion, wobei die Funktionseinheit derart ausgebildet ist, dass ausschließlich bei Erfassung des Signals mittels der Signalempfangseinheit die Fernsteuerung freigegeben ist. Auch die erfindungsgemäße Vorrichtung ermöglicht in besonders vorteilhafter Weise, dass die Fernsteuerung nur dann erfolgt, wenn die mobile Steuereinheit, d. h. insbesondere deren Kamera, auf das Fahrzeug gerichtet ist. Somit bildet die mobile Steuereinheit in der Vorrichtung in besonders vorteilhafter Weise einen Totmannschalter, wobei der Blick eines Nutzers bedingt durch die Ausrichtung der Kamera auf das Fahrzeug auf dieses gerichtet ist. Somit ist mittels der Vorrichtung eine Durchführung von autonomen Fahrvorgängen, beispielsweise autonome Einparkvorgänge, des Fahrzeugs realisierbar, welche bei einer Abwendung des Blickes des Nutzers vom Fahrzeug und daraus folgender Änderung der Ausrichtung der Kamera auf vom Fahrzeug abweichende Positionen automatisch unterbrochen werden kann.

In einer möglichen Ausgestaltung der Vorrichtung ist zwischen der mobilen Steuereinheit und dem Fahrzeug eine Datenverbindung zur Übertragung eines Berechtigungssignals von der mobilen Steuereinheit an die Funktionseinheit ausgebildet. Über diese Datenverbindung ist das Berechtigungssignal einfach, sicher und schnell übertragbar.

In einer weiteren möglichen Ausgestaltung ist die mobile Steuereinheit ein Mobiltelefon. Da herkömmliche Mobiltelefone bereits über zumindest eine Kamera oder Mikrofon und Mittel zum Aufbau einer geeigneten Datenverbindung verfügen, ist bei der Verwendung von Mobiltelefonen als mobile Steuereinheit ein Material- und Kostenaufwand weiter verringert. Es ist lediglich ein Anwendungsprogramm zur Datenverarbeitung erforderlich, welches beispielsweise in Form einer so genannten App auf das Mobiltelefon übertragbar ist. Des Weiteren zeichnet sich die Verwendung von Mobiltelefonen als mobile Steuereinheit aufgrund dessen, dass diese in den meisten Fällen von Personen ohnehin mitgeführt werden, dadurch aus, dass der Nutzer zur Fernsteuerung der Funktion kein zusätzliches Gerät mit sich führen muss.

Ausführungsbeispiele der Erfindung werden im Folgenden anhand von Zeichnungen näher erläutert.

Dabei zeigen:
- Fig. 1: schematisch ein Blockschaltbild einer erfindungsgemäßen Vorrichtung,
- Fig. 2: schematisch ein Ablaufdiagramm eines erfindungsgemäßen Verfahrens,
- Fig. 3: schematisch eine erste perspektivische Darstellung eines Fahrzeugs und einer mobilen Steuereinheit, und
- Fig. 4: schematisch eine zweite perspektivische Darstellung eines Fahrzeugs und der mobilen Steuereinheit gemäß Figur 2.

Einander entsprechende Teile sind in allen Figuren mit den gleichen Bezugszeichen versehen.

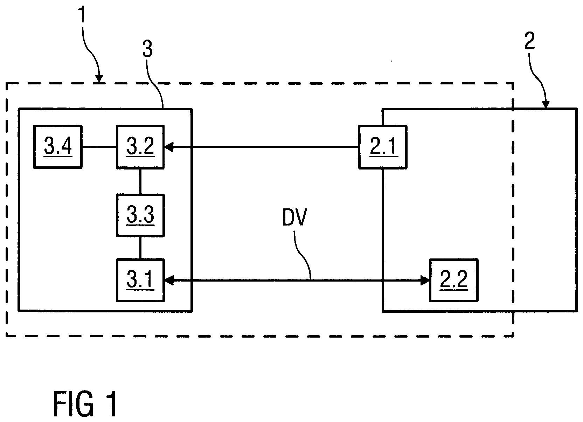

In Figur 1 ist ein Blockschaltbild eines möglichen Ausführungsbeispiels der erfindungsgemäßen Vorrichtung 1 und eines Fahrzeugs 2 dargestellt.

Die Vorrichtung 1 ist zur Fernsteuerung zumindest einer Funktion des Fahrzeugs 2 vorgesehen und umfasst hierzu eine mobile Steuereinheit 3. Im Folgenden wird als fernsteuerbare Funktion ein autonomer Einparkvorgang beispielhaft beschrieben. Abweichend hiervon können alternativ oder zusätzlich weitere Funktionen des Fahrzeugs 2, beispielsweise abweichende autonome Fahrvorgänge, autonome Ausparkvorgänge, Lichtfunktionen, Öffnen und Schließen von Fahrzeugtüren und/oder eines Schließsystems, eine Klimatisierung und Belüftung und weitere Komfortfunktionen des Fahrzeugs 2 ferngesteuert werden.

Bei der Fernsteuerung des autonomen Einparkvorgangs befindet sich der Nutzer, insbesondere ein Fahrer des Fahrzeugs 2, außerhalb des Fahrzeugs 2. Als mobile Steuereinheit 3 wird ein Mobiltelefon, beispielsweise ein so genanntes Smartphone, verwendet, welche eine Sende-/Empfangseinheit 3.1 zum Aufbau einer kabellosen Datenverbindung DV aufweist. Bei der Datenverbindung DV handelt es sich insbesondere um eine Funkverbindung, wie beispielsweise eine so genannte Bluetooth- oder WLAN-Verbindung oder eine Verbindung zur Nahfeldkommunikation. Weiterhin umfasst die mobile Steuereinheit 3 eine Signalemfangseinheit 3.2 z.B. eine Kamera oder ein Mikrophon zur Erfassung von optischen oder akustischen Signalen des Fahrzeugs 2.

Während der Fernsteuerung des autonomen Einparkvorgangs wird eine geschlossene Kommunikationskette zwischen Fahrzeug 2 und der mobilen Steuereinheit 3 aufgebaut, mittels welcher das Fahrzeug 2 eindeutig identifiziert und eine Fehl- und Fremdbedienung verhindert wird.

Zu diesem Zweck wird ausgehend von einer am Fahrzeug 2 angeordneten Signalerzeugungseinheit 2.1, welche als Lichteinheit, beispielsweise als Scheinwerfer, Rückleuchte, Fahrtrichtungsanzeiger und/oder Markierungsleuchte, ausgebildet ist, ein für das menschliche Auge sichtbares optisches Lichtsignal erzeugt. Mittels des optischen Lichtsignals werden dabei kodierte Informationen ausgegeben, wobei das optische Lichtsignal mittels der Kamera 3.2 erfasst wird. Alternativ kann es sich bei dem Lichtsignal auch um ein für menschliche Augen im nicht-sichtbaren Bereich, beispielsweise InfrarotBereich, befindliches Signal handeln, welches mit einer geeigneten Quelle erzeugt wird.

Die mittels der Signalempfangseinheit 3.2 erfassten optischen oder akustischen Signale werden mittels einer Datenverarbeitungseinheit 3.3 der mobilen Steuereinheit 3 ausgewertet und es werden die kodierten Informationen aus den optischen oder akustischen Signalen entschlüsselt. Hierzu umfasst die mobile Steuereinheit 3 ein Anwendungsprogramm zur Datenverarbeitung, welches beispielsweise in Form einer so genannten App auf die mobile Steuereinheit 3 übertragbar ist. Anschließend werden die kodierten Informationen um einen Schlüsselcode zu einem Berechtigungssignal erweitert, welches über die zwischen der mobilen Steuereinheit 3 und dem Fahrzeug 2 aufgebaute Datenverbindung DV an eine Funktionseinheit 2.2 zur Steuerung der Einparkfunktion übertragen wird.

Das von der Funktionseinheit 2.2 erfasste Berechtigungssignal wird mittels dieser auf seine Gültigkeit und Echtheit überprüft. Die Fernsteuerung der Einparkfunktion wird mittels der Funktionseinheit 2.2 ausschließlich dann freigegeben, wenn das Berechtigungssignal erfasst und als gültig erkannt wird. Somit wird sichergestellt, dass die Fernsteuerung vom Nutzer überwacht wird. Nur solange diese Kommunikationskette geschlossen ist, wird die Fernsteuerung der Einparkfunktion ausgeführt. Verändert der Nutzer die Ausrichtung der Signalemfangseinheit 3.2 der mobilen Steuereinheit 3 in der Art, dass die optischen oder akustischen Signale nicht mehr empfangen werden, wird die Fernsteuerung gestoppt. Somit bildet die mobile Steuereinheit einen so genannten Totmannschalter, mittels welchem der Nutzer die fernzusteuernde Funktion beaufsichtigen und bei einer Fehlfunktion in besonders einfacher Weise unterbrechen kann.

Um dem Nutzer die Ausrichtung der Kamera 3.2 zu erleichtern, werden die von der Kamera 3.2 erfassten Bilder des Fahrzeugs 2 mittels einer in der mobilen Steuereinheit 3 integrierten Anzeigeeinheit 3.4 ausgegeben. Diese integrierte Anzeigeeinheit kann sowohl optisch als auch in der Form von einem Lautsprecher der mobilen Steuereinheit 3 sein. Solange das Fahrzeug bzw. das optische Signal des Fahrzeugs von der Kamera 3.2 erfasst wird, wird ein optischer oder ein akustischer Hinweis ausgegeben.

Somit erfolgt eine Freigabe der Fernsteuerung ausschließlich dann, wenn das optische oder akustische Lichtsignal von der Signalempfangseinheit 3.2 erfasst wird und das Fahrzeug 2 ein gültiges Berechtigungssignal von der mobilen Steuereinheit empfängt.

Hierzu ist es erforderlich, dass die mobile Steuereinheit 3 eine Zugangs- und Fahrberechtigung für das Fahrzeug 2 umfasst und dass die Sende-/Empfangseinheit 3.1 der mobilen Steuereinheit 3 sowie eine nicht dargestellte Sende-/Empfangseinheit der Funktionseinheit eindeutig identifizierbar sind. Hierzu umfassen diese eindeutige Namen, wobei zur Durchführung der Fernsteuerung zunächst die Datenverbindung DV zwischen der mobilen Steuereinheit 3 und dem Fahrzeug 2 aufgebaut wird. Das heißt, die mobile Steuereinheit 3 und das Fahrzeug 2 werden "gepaart".

In einer möglichen Ausgestaltung ist die Fernsteuerung für einen vorgegebenen Zeitraum nach Erfassung eines als gültig vom Fahrzeug erkannten und erfassten Berechtigungssignals freigegeben.

Alternativ oder zusätzlich ist es auch möglich, dass mittels des Fahrzeugs 2 akustische Signale ausgegeben werden, welche von einem Mikrofon der mobilen Steuereinheit 3 erfasst und mittels der mobilen Steuereinheit 3 ausgewertet und um einen Schlüsselcode zu einem Berechtigungssignal erweitert werden.

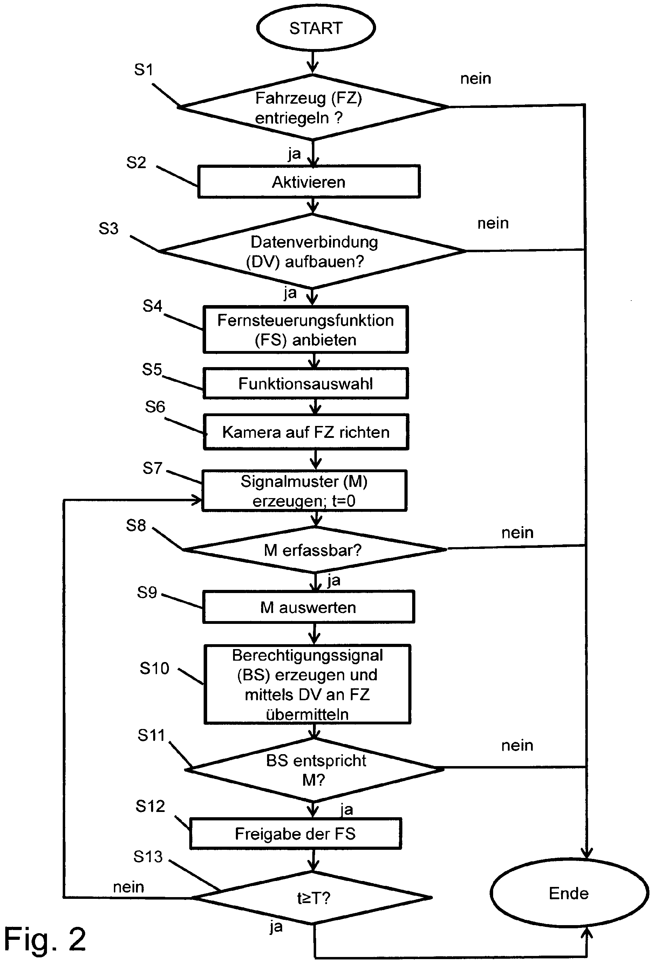

Figur 2 zeigt ein Ablaufdiagramm eines möglichen Ausführungsbeispiels des erfindungsgemäßen Verfahrens zur Fernsteuerung der Einparkfunktion des Fahrzeugs 2. Hierbei wird die Datenverbindung DV mittels einer Bluetooth-Funkverbindung realisiert und von der Signalerzeugungseinheit 2.1 wird ein optisches Lichtsignal im sichtbaren Bereich erzeugt.

Zur Durchführung dieses Ausführungsbeispiels des Verfahrens sind folgende Voraussetzungen zu erfüllen. Die Funktionseinheit 2.2 umfasst ein elektronisches Steuergerät, das die Paarung und die Datenkommunikation zwischen der mobilen Steuereinheit 3 und dem Fahrzeug 2 ermöglicht. Die mobile Steuereinheit 3 umfasst das entsprechende Anwendungsprogramm zur Datenverarbeitung.

In einem ersten Verfahrensschritt S1 wird das Fahrzeug 2 vom Nutzer entriegelt, was beispielsweise auch mittels der mobilen Steuereinheit 3 erfolgen kann.

In einem zweiten Verfahrensschritt S2 wird das Anwendungsprogramm auf der mobilen Steuereinheit 3 gestartet.

In einem dritten Verfahrensschritt S3 tritt die mobile Steuereinheit 3 über die Datenverbindung DV in Kontakt mit dem Fahrzeug 2, d. h. mit dem elektronischen Steuergerät der Funktionseinheit 2.2. Wird die Datenverbindung DV durch das Fahrzeug 2, d. h. durch das elektronische Steuergerät der Funktionseinheit 2.2 bestätigt, dann wird in einem darauffolgend vierten Verfahrensschritt S4 dem Nutzer der mobilen Steuereinheit 3 anhand des Anwendungsprogramms die Fernsteuerungsfunktion (FS) für den Einparkvorgang oder eine Auswahl verschiedener Fernsteuerungsfunktionen angeboten, aus welchen dieser wählen kann.

Die Verfahrensschritte S1 bis S4 dienen dabei einer Vorbereitung einer Verbindungsaufnahme und somit der Herstellung der Datenverbindung DV der mobilen Steuereinheit 3 mit dem Fahrzeug 2, d. h. mit dem elektronischen Steuergerät der Funktionseinheit 2.2.

In einem fünften Verfahrensschritt S5 wählt der Nutzer die gewünschte Fernsteuerungsfunktion an der mobilen Steuereinheit 3 aus. Dabei wird dem Nutzer in einem sechsten Verfahrensschritt S6 aufgefordert die Signalemfangseinheit 3.2 z.B. die Kamera der mobilen Steuereinheit 3 auf das Fahrzeug 2 zu richten.

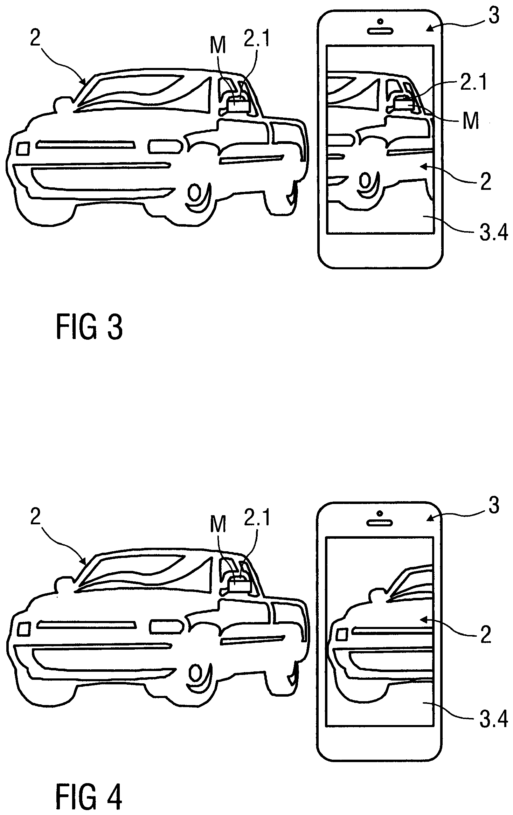

In einem siebten Verfahrensschritt S7 wird mittels der Signalerzeugungseinheit 2.1 das optische Lichtsignal als rhythmisches Leuchtsignal erzeugt. Hierbei handelt es sich im beschriebenen Ausführungsbeispiel um ein mittels eines in den Figuren 3 und 4 näher dargestellten Fahrtrichtungsanzeigers des Fahrzeugs 2 erzeugtes Signalmuster M, welches beispielsweise zufällig, jedoch nicht regelmäßig mit einer Mindestvarianz und Mindest-Zeichenlängen, die eine benötigte Überwachung im Zeitintervall erlauben, ausgebildet ist.

In einem achten Verfahrensschritt S8 wird das erzeugte optische Signalmuster M mittels der Kamera 3.2 der mobilen Steuereinheit 3 erfasst. Hierzu wird dem Nutzer beispielsweise mittels der Anzeigeeinheit 3.4 ein optischer Hinweis oder mittels eines nicht gezeigten Lautsprechers der mobilen Steuereinheit 3 ein akustischer Hinweis ausgegeben.

Richtet der Nutzer die Kamera 3.2 der mobilen Steuereinheit 3 beispielsweise auf den Boden, so dass der Fahrtrichtungsanzeiger des Fahrzeugs 2 außerhalb des Erfassungsbereichs der Kamera 3.2 liegt, so kann kein Signalmuster M mittels der Kamera 3.2 erfasst werden. Der Vorgang wird dann abgebrochen und die Fernsteuerfunktion ist nicht ausführbar.

In einem neunten Verfahrensschritt S9 wird mittels des Anwendungsprogramms der Datenverarbeitungseinheit 3.3 der mobilen Steuereinheit 3 das empfangene Signal ausgewertet. Dabei werden die kodierten Informationen aus dem Lichtsignal entschlüsselt.

Anschließend werden die kodierten Informationen in einem neunten Verfahrensschritt S9 um den Schlüsselcode zum Berechtigungssignal (BS) erweitert, welches über die zwischen der mobilen Steuereinheit und dem Fahrzeug aufgebaute Datenverbindung DV, d. h. im beschriebenen Ausführungsbeispiel über die Bluetooth-Verbindung, an die Funktionseinheit 2.2 zur Steuerung der Einparkfunktion übertragen wird.

In einem elften Verfahrensschritt S11 wird das Berechtigungssignal (BS) mittels des elektronischen Steuergeräts der Funktionseinheit 2.2 des Fahrzeugs 2 ausgewertet, wobei bei der Auswertung insbesondere ein Vergleich des gesendeten Signalmusters M mit dem empfangenen Berechtigungssignal erfolgt.

Wird das Berechtigungssignal vom Steuergerät der Funktionseinheit 2.2 als gültig erkannt, bestätigt dieses im zwölften Verfahrensschritt S12, dass die Kommunikationskette zwischen Fahrzeug 2 und der mobilen Steuereinheit 3 geschlossen ist und gibt die Fernsteuerungsfunktion frei.

In einem dreizehnten Verfahrensschritt S13 wird überprüft, ob die Zeit zwischen der Erzeugung des Signalmusters M im Verfahrensschritt S7 und Freigabe der Fernsteuerfunktion S12 ein für die Überwachung geeignetes Zeitintervall T, welches beispielsweise 100 ms lang ist, überschreitet. Solange dieses Zeitintervall T nicht überschritten wird, werden die Verfahrensschritte S7 bis S12 wiederholt. Ist diese Zeit T überschritten, wird die Fernsteuerungsfunktion beendet.

In Figur 3 ist eine erste perspektivische Darstellung des Fahrzeugs 2 und der als Mobiltelefon ausgebildeten mobilen Steuereinheit 3 dargestellt, wobei das mittels des Fahrtrichtungsanzeigers des Fahrzeugs 2 erzeugte Signalmuster M im Erfassungsbereich der Kamera 3.2 liegt und die Kommunikationskette zwischen Fahrzeug 2 und mobiler Steuereinheit 3 geschlossen ist. Somit ist die Fernsteuerungsfunktion freigegeben.

Die mittels der Kamera 3.2 erfassten Bilder werden dabei mittels der Anzeigeeinheit 3.4 dargestellt.

Figur 4 zeigt eine zweite perspektivische Darstellung des Fahrzeugs 2 und der als Mobiltelefon ausgebildeten mobilen Steuereinheit 3, wobei das mittels des Fahrtrichtungsanzeigers des Fahrzeugs 2 erzeugte Signalmuster M außerhalb des Erfassungsbereichs der Kamera 3.2 liegt, da die Kamera 3.2 nicht korrekt auf das Fahrzeug 2 ausgerichtet ist. Somit ist die Kommunikationskette zwischen Fahrzeug 2 und mobiler Steuereinheit 3 unterbrochen. Somit ist die Fernsteuerungsfunktion gesperrt.

Die mittels der Kamera 3.2 erfassten Bilder werden dabei mittels der Anzeigeeinheit 3.4 dargestellt. In nicht näher dargestellter Weise kann dem Nutzer ein optischer und/oder akustischer Hinweis ausgegeben werden, dass die Kommunikationskette zwischen Fahrzeug 2 und mobiler Steuereinheit 3 unterbrochen ist und dass ein Ausrichten der Kamera 3.2 der mobilen Steuereinheit 3 auf das Fahrzeug 2, insbesondere die jeweiligen Signalerzeugungseinheit 2.1, erforderlich ist, um die Fernsteuerungsfunktion freizugeben.

## Patentansprüche

1. Verfahren zur Fernsteuerung einer Funktion eines Fahrzeugs (2) mittels einer mobilen Steuereinheit (3), wobei mittels einer in der mobilen Steuereinheit (3) integrierten Signalempfangseinheit (3.2) ein akustisches oder optisches Signal des Fahrzeugs (2) erfasst wird, das an einer vorgegebenen Position am Fahrzeug (2) erzeugt wird,
**dadurch gekennzeichnet,**
- **dass** die Fernsteuerung ausschließlich dann freigegeben wird und nur solange freigegeben bleibt, wenn und solange ein Nutzer die mobile Steuereinheit (3) so hält, dass das optische oder akustische Signal von der Signalempfangseinheit (3.2) erfasst wird und
- **dass** die Durchführung der Fernsteuerung unterbrochen wird, wenn das Signal von der Signalempfangseinheit (3.2) nicht erfasst wird.

2. Verfahren nach Anspruch 1,
**dadurch gekennzeichnet, dass**
mittels des optischen oder akustischen Signals kodierte Informationen ausgegeben werden.

3. Verfahren nach Anspruch 2,
**dadurch gekennzeichnet, dass**
die kodierten Informationen mittels der Signalempfangseinheit (3.2) erfasst und mittels der mobilen Steuereinheit (3) verarbeitet und um einen Schlüsselcode zu einem Berechtigungssignal erweitert werden, wobei das Berechtigungssignal über eine zwischen der mobilen Steuereinheit (3) und dem Fahrzeug (2) aufgebaute Datenverbindung (DV) an das Fahrzeug (2) übertragen wird.

4. Verfahren nach Anspruch 3,
**dadurch gekennzeichnet, dass**
die Fernsteuerung weiterhin ausschließlich dann freigegeben wird, wenn das Berechtigungssignal vom Fahrzeug (2) erfasst und als gültig erkannt wird.

5. Verfahren nach Anspruch 3 oder 4,
**dadurch gekennzeichnet, dass**
die Fernsteuerung für einen vorgegebenen Zeitraum nach Erfassung eines als gültig vom Fahrzeug (2) erkannten und erfassten Berechtigungssignals freigegeben wird.

6. Verfahren nach einem der vorhergehenden Ansprüche,
**dadurch gekennzeichnet, dass**
die mittels der Kamera (3.2) erfassten Bilder des Fahrzeugs (2) mittels einer in der mobilen Steuereinheit (3) integrierten optischen Anzeigeeinheit (3.4) ausgegeben werden.

7. Verfahren nach einem der vorhergehenden Ansprüche,
**dadurch gekennzeichnet, dass**
das optische Signal als Lichtsignal mittels zumindest einer Lichteinheit des Fahrzeugs (2) ausgegeben wird.

8. Vorrichtung (1) zur Fernsteuerung einer autonomen Funktion eines Fahrzeugs (2), wobei an einer vorgegebenen Position am Fahrzeug (2) eine Signalerzeugungseinheit (2.1) zur Erzeugung eines optischen oder akustischen Signals angeordnet ist wobei eine mobile Steuereinheit (3) eine integrierte Signalempfangseinheit (3.2) zur Erfassung des Signals des Fahrzeugs (2) umfasst,
und wobei das Fahrzeug (2) zumindest eine Funktionseinheit (2.2) zur Steuerung der zumindest autonomen Funktion umfasst,
**dadurch gekennzeichnet,**
- **dass** die Funktionseinheit (2.2) derart ausgebildet ist, dass die Fernsteuerung ausschließlich dann freigegeben ist und nur solange freigegeben bleibt, wenn und solange die mobile Steuerheinheit (3) derart auf die Signalerzeugungseinheit (2.1) ausgerichtet ist, dass die Signalempfangseinheit (3.2) das optische oder akustische Signal empfängt und
- **dass** die Durchführung der Fernsteuerung unterbrochen wird, wenn das Signal von der Signalempfangseinheit (3.2) nicht erfasst wird.

9. Vorrichtung (1) nach Anspruch 8,
**dadurch gekennzeichnet, dass**
zwischen der mobilen Steuereinheit (3) und dem Fahrzeug (2) eine Datenverbindung (DV) zur Übertragung eines Berechtigungssignals von der mobilen Steuereinheit (3) an die Funktionseinheit (2.2) ausgebildet ist.

10. Vorrichtung (1) nach Anspruch 8 oder 9,
**dadurch gekennzeichnet, dass**
die Signalempfangseinheit (3.2) eine Kamera oder ein Mikrofon ist.

## Claims

1. Method for the remote control of a function of a vehicle (2) by means of a mobile control unit (3), wherein an audible or visual signal of the vehicle (2), which is generated at a predetermined position at the vehicle (2), is detected by a signal reception unit (3.2) integrated into the mobile control unit (3),
**characterised in that**
- the remote control is only enabled and remains enabled if and as long as a user holds the mobile control unit (3) in such a way that the audible or visual signal is detected by the signal reception unit (3.2), and
- the execution of the remote control is interrupted if the signal is not detected by the signal reception unit (3.2).

2. Method according to claim 1,
**characterised in that**
coded information is output by means of the visual or audible signal.

3. Method according to claim 2,
**characterised in that**
the coded information is detected by means of the signal reception unit (3.2) and processed by means of the mobile control unit (3) and extended by a key code into an authorisation signal, the authorisation signal being transmitted to the vehicle (2) via a data link (DV) built up between the mobile control unit (3) and the vehicle (2).

4. Method according to claim 3,
**characterised in that**
the remote control is furthermore only enabled if the authorisation signal is detected by the vehicle (2) and identified as valid.

5. Method according to claim 3 or 4,
**characterised in that**
the remote control is enabled for a predetermined period of time on detection of an authorisation signal which has been identified as valid and detected by the vehicle (2).

6. Method according to any of the preceding claims,
**characterised in that**
the images of the vehicle (2) which are detected by means of the camera (3.2) are output by means of a visual display unit (3.4) integrated into the mobile control unit (3).

7. Method according to any of the preceding claims,
**characterised in that**
the visual signal is output as a light signal by means of at least one light unit of the vehicle (2).

8. Device (1) for the remote control of an autonomous function of a vehicle (2), wherein a signal generating unit (2.1) for generating a visual or audible signal is located at a predetermined position at the vehicle (2), wherein a mobile control unit (3) comprises an integrated signal reception unit (3.2) for detecting the signal of the vehicle (2), and wherein the vehicle (2) comprises at least one functional unit (2.2) for the control of the autonomous function,
**characterised in that**
- the functional unit (2.2) is designed such that the remote control is only enabled and remains enabled if and as long as the mobile control unit (3) is oriented towards the signal generating unit (2.1) in such away that the signal reception unit (3.2) receives the visual or audible signal, and
- the execution of the remote control is interrupted if the signal is not detected by the signal reception unit (3.2).

9. Device (1) according to claim 8,
**characterised in that**
a data link (DV) is built up between the mobile control unit (3) and the vehicle (2) for the transmission of an authorisation signal from the mobile control unit (3) to the functional unit (2.2).

10. Device (1) according to claim 8 or 9,
**characterised in that**
the signal reception unit (3.2) is a camera or a microphone.

## Revendications

1. Procédé de commande à distance d'une fonction d'un véhicule automobile (2) au moyen d'une unité de commande mobile (3), une unité de réception de signal (3.2) intégrée dans l'unité de commande mobile (3) permettant de détecter un signal acoustique ou optique du véhicule automobile (2), ledit signal acoustique ou optique étant émis à une position prédéfinie dans le véhicule automobile (2), **caractérisé**
- **en ce que** la commande à distance est ensuite déclenchée exclusivement et demeure uniquement déclenchée aussi longtemps qu'un utilisateur maintient l'unité de commande mobile (3) de telle manière que le signal optique ou acoustique soit détecté par l'unité de réception de signal (3.2) et
- **en ce que** l'exécution de la commande à distance est interrompue lorsque le signal n'est pas détecté par l'unité de réception de signal (3.2).

2. Procédé selon la revendication 1, **caractérisé en ce que** le signal optique ou acoustique permet de faire sortir des informations codées.

3. Procédé selon la revendication 2, **caractérisé en ce que** les informations codées sont détectées au moyen de l'unité de réception de signal (3.2) et sont traitées au moyen de l'unité de commande mobile (3) et s'augment d'un code de clé pour un signal d'autorisation, le signal d'autorisation étant transmis par une liaison de données (DV) établie entre l'unité de commande mobile (3) et le véhicule automobile (2) au véhicule automobile (2).

4. Procédé selon la revendication 3, **caractérisé en ce que** la commande à distance est exclusivement déclenchée lorsque le signal d'autorisation du véhicule automobile (2) est détecté et reconnu comme étant valable.

5. Procédé selon la revendication 3 ou la revendication 4, **caractérisé en ce que** la commande à distance est déclenchée pour un laps de temps prédéfini après la détection d'un signal d'autorisation détecté et reconnu comme étant valable par le véhicule automobile (2).

6. Procédé selon l'une quelconque des revendications précédentes, **caractérisé en ce que** des images du véhicule automobile (2) détectées par la caméra (3.2) sont affichées au moyen d'une unité d'affichage (3.4) optique intégrée dans l'unité de commande mobile (3).

7. Procédé selon l'une quelconque des revendications précédentes, **caractérisé en ce que** signal optique étant émis en tant que signal lumineux au moyen d'au moins une unité lumineuse du véhicule automobile (2).

8. Dispositif (1) de commande à distance d'une fonction autonome d'un véhicule automobile (2), une unité de génération de signal (2.1) étant disposée dans une position prédéfinie sur le véhicule automobile (2) pour détecter un signal optique ou acoustique, une unité de commande (3) mobile détectant une unité de réception de signal intégrée (3.2) pour détecter le signal du véhicule automobile (2), et le véhicule automobile (2) détectant au moins une unité fonctionnelle (2 ?2) pour commander ledit fonctionnement autonome, **caractérisé**
- **en ce que** l'unité fonctionnelle (2.2) est conçue de telle manière que la commande à distance soit alors exclusivement déclenchée et demeure uniquement déclenchée tant que l'unité de commande mobile (3) est orientée vers l'unité de génération de signal (2.1) de telle manière que l'unité de réception de signal (3.2) reçoive le signal optique ou acoustique et
- **en ce que** l'exécution de la commande à distance est interrompue lorsque le signal n'est pas détecté par l'unité de réception de signal (3.2).

9. Dispositif (1) selon la revendication 8, **caractérisé en ce qu'**entre l'unité de commande mobile (3) et le véhicule automobile (2) est établie une liaison de données (DV) pour transmettre un signal d'autorisation provenant de l'unité de commande mobile (3) à l'unité fonctionnelle (2.2).

10. Dispositif (1) selon la revendication 8 ou la revendication 9, **caractérisé en ce que** l'unité de réception de signal (3.2) est une caméra ou un microphone.
